# EUROPEAN PATENT SPECIFICATION

(11) **EP 3 374 238 B1**
(45) Date of publication and mention of the grant of the patent: **28.04.2021**
(21) Application number: 16805511.9
(22) Date of filing: 08.11.2016
(51) Int. Cl.: B60R 25/00, H01R 13/447, H01R 13/453, H01R 13/639, B60R 25/30

(54) **PROTECTION DEVICE FOR LINK CONNECTORS TO THE ON-BOARD DIAGNOSTICS OF A VEHICLE**
SCHUTZVORRICHTUNG FÜR DIE OBD-DOSE EINES FAHRZEUGS
DISPOSITIF DE PROTECTION POUR CONNECTEURS DE LIAISON AUX DIAGNOSTICS EMBARQUÉS D'UN VÉHICULE

(30) Priority: 09.11.2015 IT UB20155374
(43) Date of publication of application: 19.09.2018
(73) Proprietor: Meta System S.p.A., 42124 Reggio Emilia (IT)
(72) Inventor: SIMONAZZI, Giuseppe, 42124 Reggio Emilia (IT)
(74) Representative: Grana, Daniele
(86) International application number: PCT/IB2016/056701
(87) International publication number: WO 2017/081598

(56) References cited:
- WO-A1-2013/191563
- WO-A1-2014/181094
- WO-A2-02/097754
- DE-U1-202014 001 790
- DE-U1-202015 103 280
- US-A1- 2008 214 022

## Description

### Technical Field

The present invention relates to a protection device for link connectors to the on-board diagnostics of a vehicle, particularly for link connectors to the on-board diagnostic systems according to the OBD (On-Board Diagnostics) standards.

### Background Art

The use is known on motor vehicles and motorcycles of special so-called OBD (On-Board Diagnostics) on-board diagnostic systems, adapted to detect and signal any vehicle faults or malfunctions.

In practice, the systems according to the OBD-II standard in the United States and the corresponding E-OBD standard in Europe are able to provide, for example to a specialized technician inside a garage during a vehicle inspection, all the information needed to analyze the condition of each subsystem of the vehicle itself.

The recent implementations of the OBD systems employ a suitable digital communication port through which, when connected to a special external analysis unit, real-time information can be obtained relating to the condition of the vehicle, together with vehicle fault and malfunction reports by means of standard DTC (Diagnostic Trouble Codes) codes.

The OBD digital communication port meets common standards set for all models and makes of vehicles and is connectable to an external diagnostic unit through a respective connector.

The ease of access to the OBD ports, as well as the increasingly greater standardization and sharing of the OBD protocols used, do however entail drawbacks from the point of view of vehicle safety.

In fact the increasingly more widespread use is known of specially designed kits to allow the theft of cars that use so-called keyless starting systems through access to such OBD ports.

In fact, such kits comprise an electronic device that can be connected directly to an OBD port and which has software able to bypass the security of the on-board diagnostics, for the reprogramming of the code management software of the vehicle electronic access and start key.

This way, therefore, the code can be changed of the access key managed by the security software present in the vehicle central control unit, and, by means of special appropriately programmed virgin keys, the vehicle can be normally started.

A prior art device for preventing access to such OBD ports is disclosed in US2008/214022A1.

### Description of the Invention

The main aim of the present invention is to provide a protection device for link connectors to the on-board diagnostics of a vehicle, in particular for link connectors to the on-board diagnostic systems according to the OBD (On-Board Diagnostics) standards which allows avoiding undesired accesses to the vehicle diagnostic system.

Another object of the present invention is to provide a protection device for link connectors to the on-board diagnostics of a vehicle which allows to overcome the mentioned drawbacks of the prior art within the ambit of a simple, rational, easy, effective to use and affordable solution.

The objects stated above are achieved by the present protection device for link connectors to the on-board diagnostics of a vehicle according to the characteristics described in the claim 1.

The objects stated above are achieved by the present protection system for link connectors to the on-board diagnostics of a vehicle according to the characteristics described in the claim 14.

### Brief Description of the Drawings

Other characteristics and advantages of the present invention will become better evident from the description of a preferred, but not exclusive, embodiment of a protection device and a system for link connectors to the on-board diagnostics of a vehicle, illustrated by way of an indicative yet non-limiting example in the accompanying drawings in which:

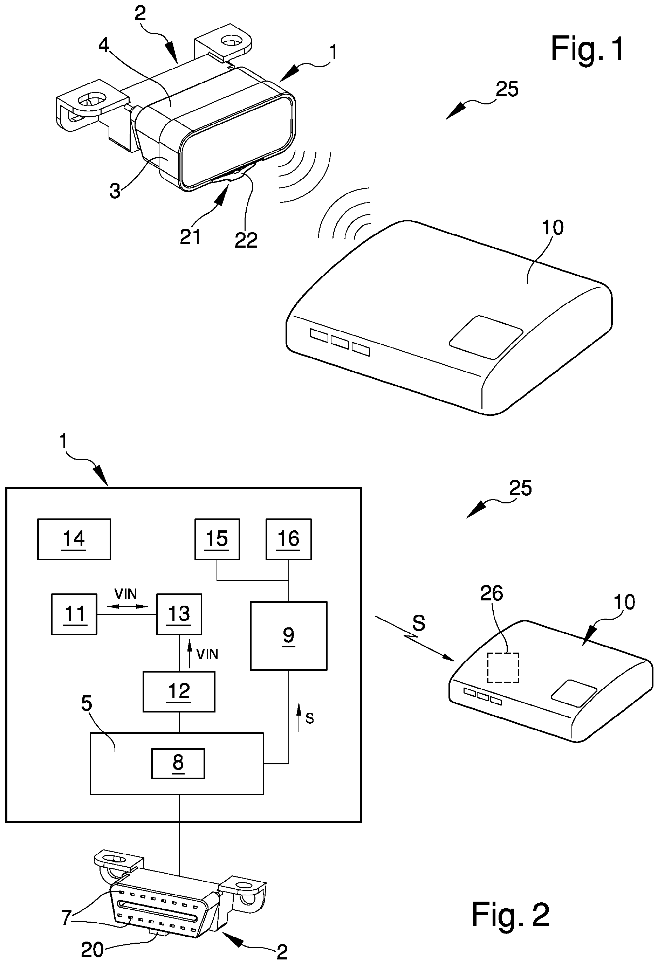

Figure 1 is a schematic view of the protection system according to the invention;
Figure 2 is a general block diagram view of the protection system according to the invention;

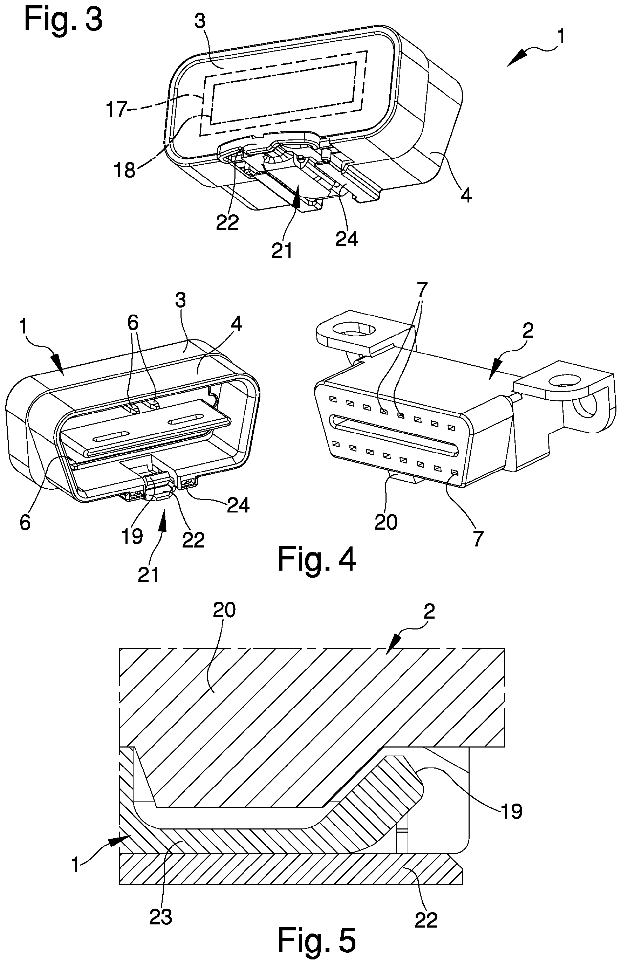

Figure 3 is an axonometric view of the protection device according to the invention;
Figures 4 and 5 schematically illustrate the connection of the protection device according to the invention to a connection port of the OBD type.

### Embodiments of the Invention

With particular reference to such figures, reference numeral 1 globally indicates a protection device for link connectors to the on-board diagnostics of a vehicle Advantageously, the protection device 1 is applicable to a connection port 2 of the OBD type (On-Board Diagnostics) of a vehicle, in order to avoid undesired accesses to the vehicle diagnostic system.

In particular, the protection device 1 is specifically designed to counter the use of the known kits designed for the theft of vehicles using the so-called keyless starting systems.

Specifically, the protection device 1 comprises a covering body 3 of a connection port 2 of the OBD type of an on-board diagnostic system of a vehicle.

In particular, the covering body 3 is insertable on the connection port 2 so as to cover all the terminals of the connection port itself.

According to a preferred embodiment, shown in the illustrations, the covering body 3 has small dimensions and a shape that substantially reproduces the conformation of the connection port 2. Different embodiments and dimensions of the connection port 2 cannot however be ruled out.

The covering body 3 comprises a connector 4 of the OBD type coupleable to the connection port 2.

The connector 4, therefore, allows the perfect coupling of the protection device 1 to the connection port 2 of the on-board diagnostic system of the vehicle. According to the invention, the protection device 1 also comprises electronic detection means 5 adapted to detect the connection/disconnection of the connector 4 to/from the connection port 2.

In particular, according to a preferred embodiment, the electronic detection means 5 are adapted to detect the coupling of the protection device 1 to the connection port 2 and to signal the presence of such coupling by means of notification signals S transmitted at predefined time intervals.

In this case, the detection means 5 are therefore adapted to stop the periodic communication of the notification signal S in the event of disconnection from the connection port 2.

Alternatively, the electronic detection means 5 are adapted to detect the disconnection of the protection device 1 from the connection port 2 and to signal this disconnection event by means of at least one appropriate notification signal S. In this case, the active signaling of the disconnection from the connection port 2 implies the use of a battery inside the device 1.

According to the invention, the connector 4 comprises at least one electrical terminal 6 connectable to at least one corresponding electrical terminal 7 of said connection port.

In such case, the electronic detection means 5 comprises checking means 8 adapted to check the presence of an electrical connection between the electrical terminal 6 of the connector 4 and the electrical terminal 7 of the connection port 2.

The protection device 1 also comprises at least one radio-wave communication unit 9 operatively connected to the electronic detection means 5 and adapted to send the notification signal S to a central control unit 10 of the vehicle, in order to signal to the central control unit 10 the unauthorized disconnection of the connector 4 from the connection port 2.

The central control unit 10 has, therefore, checking means for checking the presence of the periodic notification signal S sent by the device 1 and, in the absence of such notification signal S, is adapted to send an alarm signal towards a remote unit or, in any case, to activate specific anti-theft devices installed on the motor vehicle.

Alternatively, in the event of the electronic detection means 5 being adapted to signal the disconnection of the protection device 1 from the connection port 2 by means of a suitable notification signal S, the central control unit 10 operates in case of the presence of such notification signal.

In particular, the radio-wave communication unit 9 can consist of a short-range communication unit of the type of a Bluetooth, WiFi transmitter/receiver or the like.

Furthermore, according to a possible embodiment, the protection device 1 comprises a storage unit 11 of at least one VIN (Vehicle Identification Number) code of the vehicle.

In this case, the protection device 1 comprises reading means 12 adapted to read the VIN code of the vehicle through the connection port 2 and by means of the on-board diagnostic system and control means 13 adapted to check the correspondence between the stored VIN code and the VIN code of the vehicle. Conveniently, the connector 4 can comprise an electrical terminal 6 connectable to a respective electrical terminal 7 of the connection port 2.

Alternatively or in addition to the electrical terminal 7, the protection device 1 can comprise a power supply battery 14.

Conveniently, the protection device 1 can comprise a localization unit 15 adapted to allow the localization of the position of said vehicle.

Such localization unit 15 can consist e.g. of a GPS receiver adapted to provide information about the geographical coordinates of the vehicle over time. Moreover, the protection device 1 can comprise a detection unit 16 of the instantaneous acceleration of the vehicle.

In particular, such detection unit 16 can consist of an accelerometer, e.g. a three-axis accelerometer.

Conveniently, the covering body 3 has an internal seat 17 for housing the whole electronics.

In particular, the protection device 1 preferably comprises at least one electronic board 18 housed inside the seat 17 and having the electronic detection means 5, the radio-wave communication unit 9 and, if necessary, the checking means 8, the storage unit 11, the reading means 12, the control means 13, the battery 14, the localization unit 15 and the accelerometer 16.

Conveniently, the protection device 1 comprises a suitably shaped projecting element 19 and adapted to engage onto a respective abutment element 20 of the connection port 2, when the protection device itself is inserted on the connection port 2.

In particular, the projecting element 19 can consist of a suitably shaped tooth. Furthermore, the protection device 1 comprises locking means, globally indicated in the illustrations with reference numeral 21, adapted to lock the tooth 19 at the abutment element 20 of the connection port 2.

In particular, the locking means 21 comprise a movable element 22 associated with the covering body 3 and operatively connected to the tooth 19.

The movable element 22 is positionable in a stop position, in which the tooth 19 is pressed and locked at the abutment element 20 of the connection port 2. With non-exclusive reference to a preferred embodiment of the adapter 1, shown in the illustrations, the covering body 3 comprises a flexible element 23 having the tooth 19.

The movable element 22 is associated in a sliding manner with the covering body 3 between a disengagement position, in which it is substantially moved away from the tooth 19, and the stop position, in which it is engaged on the flexible element 23, in the proximity of the tooth 19, to lock the tooth itself at the abutment element 20 of the connection port 2.

In particular, the flexible element 23 can consist of a flexion spring which extends substantially parallel to the direction of extension of the protection device 1, from a rear portion of the covering body 3 to a front portion of the covering body 3.

The locking means 21 also comprise guiding means 24 adapted to guide the sliding of the movable element 22 between the disengagement position and the stop position.

In particular, with reference to the embodiment of the protection device 1 shown in the illustrations, the guiding means 24 consist of a rectilinear guide made integral with the covering body 3.

The system according to the invention, globally indicated with reference numeral 25, comprises the aforementioned protection device 1 and a central control unit 10 installable on the vehicle and having a further radio-wave communication unit 26 operatively connected to the radio-wave communication unit 9 of the protection device 1.

In particular, during operation, the central control unit 10 is adapted to receive the notification signal S from the protection device 1.

It has in practice been ascertained that the described invention achieves the intended objects.

In particular, the fact is underlined that the protection device according to the invention allows avoiding undesired accesses to the vehicle diagnostic system.

In particular, the protection device according to the invention operates in the event of unauthorized removal from the OBD connection port to signal an attempted unauthorized access to the on-board diagnostic system of the vehicle.

## Claims

1. Protection device (1) for link connectors to the on-board diagnostics of a vehicle, **characterized in that** it comprises:
- a covering body (3) of a connection port (2) of the OBD type of an on-board diagnostic system of a vehicle, wherein said covering body (3) comprises at least one connector (4) insertable into said connection port (2), and wherein said connector (4) comprises at least one electrical terminal (6) connectable to at least one corresponding electrical terminal (7) of said connection port (2);
- electronic detection means (5) for detecting the connection/disconnection of said covering body (3) to/from said connection port (2), wherein said electronic detection means (5) comprise checking means (8) of the connection between said at least one electrical terminal (6) of the connector (4) and said at least one electrical terminal (7) of the connection port (2);
- at least one radio-wave communication unit (9) operatively connected to said electronic detection means (5) and able to send at least to one central control unit (10) of said vehicle at least one notification signal (S) of the connection/disconnection of said covering body (3) to/from said connection port (2).

2. Protection device (1) according to claim 1, **characterized in that** said electronic detection means (5) are able to detect the coupling of said protection device (1) to said connection port (2) and said radio-wave communication unit (9) is able to signal the presence of said coupling by means of the transmission of said notification signal (S) at predefined time intervals.

3. Protection device (1) according to claim 1, **characterized in that** said electronic detection means (5) are able to detect the disconnection of the protection device (1) from the connection port (2) and said radio-wave communication unit (9) is able to signal said disconnection by means of the transmission of said notification signal (S).

4. Protection device (1) according to one or more of the preceding claims, **characterized in that** it comprises at least one storage unit (11) of at least one VIN (Vehicle Identification Number) code of said vehicle.

5. Protection device (1) according to claim 4, **characterized in that** it comprises reading means (12) of the VIN code of said vehicle by means of said on-board diagnostic system and control means (13) of the correspondence between said stored VIN code and said VIN code of the vehicle.

6. Protection device (1) according to one or more of the preceding claims, **characterized in that** said connector (4) comprises at least one power supply terminal (6) connectable to a respective power supply terminal (7) of said connection port (2).

7. Protection device (1) according to one or more of the preceding claims, **characterized in that** it comprises at least one power supply battery (14).

8. Protection device (1) according to one or more of the preceding claims, **characterized in that** said radio-wave communication unit (9) is a short-range communication unit.

9. Protection device (1) according to one or more of the preceding claims, **characterized in that** it comprises at least one localization unit (15) of the position of said vehicle.

10. Protection device (1) according to one or more of the preceding claims, **characterized in that** it comprises at least one detection unit (16) of the instantaneous acceleration of said vehicle.

11. Protection device (1) according to one or more of the preceding claims, **characterized in that** said covering body (3) comprises at least one housing seat (17) of said electronic detection means (5) and of said communication unit.

12. Protection device (1) according to one or more of the preceding claims, **characterized in that** said connector (4) comprises at least one projecting element (19) engageable in correspondence of at least one respective abutment element (20) on said connection port (2) and locking means (21) of said projecting element (19) in correspondence of said abutment element (20), able to prevent unwanted disconnections of the connector (4) itself from the connection port (2).

13. Protection device (1) according to one or more of the preceding claims, **characterized in that** said locking means (21) comprise at least one movable element (22) associated with said covering body (3) and operatively connected to said projecting element (19), said movable element (22) being positionable in a stop position, in which said projecting element (19) is pressed and locked in correspondence of said abutment element (20).

14. Protection system (25) for link connectors to the on-board diagnostics of a vehicle, **characterized in that** it comprises at least one protection device (1) according to one or more of the preceding claims and at least one central control unit (10) installable on said vehicle and having a further radio-wave communication unit (26) operatively connected to said radio-wave communication unit (9) of said protection device (1), said central control unit (10) being able to send an alarm signal towards a remote station and/or to activate at least one anti-theft device installed on said vehicle in the event of unauthorized disconnection of said protection device (1) from said connection port (2).

## Patentansprüche

1. Schutzvorrichtung (1) für Verbindungsstecker zur On-Board-Diagnose eines Fahrzeugs, **dadurch gekennzeichnet, dass** sie umfasst:
- einen Abdeckkörper (3) eines Verbindungsports (2) vom OBD-Typ eines On-Board-Diagnosesystems eines Fahrzeugs, wobei der Abdeckkörper (3) mindestens einen Verbinder (4) umfasst, der in den Verbindungsport (2) einführbar ist, und wobei der Verbinder (4) mindestens einen elektrischen Anschluss (6) umfasst, der mit mindestens einem entsprechenden elektrischen Anschluss (7) des Verbindungsports (2) verbindbar ist;
- elektronische Erfassungsmittel (5) zum Erfassen der Verbindung/Trennung des Abdeckkörpers (3) mit/von dem Verbindungsport (2), wobei die elektronischen Erfassungsmittel (5) Prüfmittel (8) der Verbindung zwischen dem mindestens einen elektrischen Anschluss (6) des Verbinders (4) und dem mindestens einen elektrischen Anschluss (7) des Verbindungsports (2) umfassen;
- mindestens eine Funkwellen-Kommunikationseinheit (9), die mit den elektronischen Erfassungsmitteln (5) in Wirkverbindung steht und in der Lage ist, mindestens an eine zentrale Steuereinheit (10) des Fahrzeugs mindestens ein Benachrichtigungssignal (S) über die Verbindung/Trennung des Abdeckkörpers (3) mit/von dem Verbindungsport (2) zu senden.

2. Schutzvorrichtung (1) nach Anspruch 1, **dadurch gekennzeichnet, dass** die elektronischen Erfassungsmittel (5) in der Lage sind, die Kopplung der Schutzvorrichtung (1) mit dem Verbindungsport (2) zu erfassen, und die Funkwellen-Kommunikationseinheit (9) in der Lage ist, das Vorhandensein der Kopplung mittels der Übertragung des Benachrichtigungssignals (S) in vordefinierten Zeitintervallen zu signalisieren.

3. Schutzvorrichtung (1) nach Anspruch 1, **dadurch gekennzeichnet, dass** die elektronischen Erfassungsmittel (5) in der Lage sind, die Trennung der Schutzvorrichtung (1) von dem Verbindungsport (2) zu erfassen, und die Funkwellen-Kommunikationseinheit (9) in der Lage ist, die Trennung mittels der Übertragung des Benachrichtigungssignals (S) zu signalisieren.

4. Schutzvorrichtung (1) nach einem oder mehreren der vorhergehenden Ansprüche, **dadurch gekennzeichnet, dass** sie mindestens eine Speichereinheit (11) von mindestens einem VIN (Vehicle Identification Number)-Code des Fahrzeugs umfasst.

5. Schutzvorrichtung (1) nach Anspruch 4, **dadurch gekennzeichnet, dass** sie Lesemittel (12) des VIN-Codes des Fahrzeugs mittels des On-Board-Diagnosesystems und Kontrollmittel (13) für die Übereinstimmung des gespeicherten VIN-Codes mit dem VIN-Code des Fahrzeugs umfasst.

6. Schutzvorrichtung (1) nach einem oder mehreren der vorhergehenden Ansprüche, **dadurch gekennzeichnet, dass** der Verbinder (4) mindestens einen Stromversorgungsanschluss (6) umfasst, der mit einem entsprechenden Stromversorgungsanschluss (7) des Verbindungsports (2) verbindbar ist.

7. Schutzvorrichtung (1) nach einem oder mehreren der vorangehenden Ansprüche, **dadurch gekennzeichnet, dass** sie mindestens eine Stromversorgungsbatterie (14) umfasst.

8. Schutzvorrichtung (1) nach einem oder mehreren der vorangehenden Ansprüche, **dadurch gekennzeichnet, dass** die Funkwellen-Kommunikationseinheit (9) eine Kurzstrecken-Kommunikationseinheit ist.

9. Schutzvorrichtung (1) nach einem oder mehreren der vorhergehenden Ansprüche, **dadurch gekennzeichnet, dass** sie mindestens eine Lokalisierungseinheit (15) der Position des Fahrzeugs umfasst.

10. Schutzvorrichtung (1) nach einem oder mehreren der vorhergehenden Ansprüche, **dadurch gekennzeichnet, dass** sie mindestens eine Erfassungseinheit (16) für die momentane Beschleunigung des Fahrzeugs umfasst.

11. Schutzvorrichtung (1) nach einem oder mehreren der vorhergehenden Ansprüche, **dadurch gekennzeichnet, dass** der Abdeckkörper (3) mindestens einen Gehäusesitz (17) der elektronischen Erfassungseinrichtung (5) und der Kommunikationseinheit aufweist.

12. Schutzvorrichtung (1) nach einem oder mehreren der vorhergehenden Ansprüche, **dadurch gekennzeichnet, dass** der Verbinder (4) mindestens ein vorstehendes Element (19), das in Übereinstimmung mit mindestens einem entsprechenden Anschlagelement (20) an dem Verbindungsport (2) in Eingriff gebracht werden kann, und Verriegelungsmittel (21) des vorstehenden Elements (19) in Übereinstimmung mit dem Anschlagelement (20) umfasst, die in der Lage sind, unerwünschte Trennungen des Verbinders (4) selbst von dem Verbindungsport (2) zu verhindern.

13. Schutzvorrichtung (1) nach einem oder mehreren der vorhergehenden Ansprüche, **dadurch gekennzeichnet, dass** die Verriegelungsmittel (21) mindestens ein bewegliches Element (22) umfassen, das dem Abdeckkörper (3) zugeordnet ist und mit dem vorstehenden Element (19) in Wirkverbindung steht, wobei das bewegliche Element (22) in einer Anschlagposition positionierbar ist, in der das vorstehende Element (19) gedrückt und in Übereinstimmung mit dem Anschlagelement (20) verriegelt ist.

14. Schutzsystem (25) für Verbindungsstecker mit der On-Board-Diagnose eines Fahrzeugs, **dadurch gekennzeichnet, dass** es mindestens eine Schutzvorrichtung (1) nach einem oder mehreren der vorhergehenden Ansprüche und mindestens eine zentrale Steuereinheit (10) umfasst, die an dem Fahrzeug installierbar ist und eine weitere Funkwellen-Kommunikationseinheit (26) aufweist, die mit der Funkwellen-Kommunikationseinheit (9) der Schutzvorrichtung (1) in Wirkverbindung steht, wobei die zentrale Steuereinheit (10) in der Lage ist, im Falle einer unbefugten Trennung der Schutzvorrichtung (1) von dem Verbindungsport (2) ein Alarmsignal an eine entfernte Station zu senden und/oder mindestens eine an dem Fahrzeug installierte Diebstahlsicherungsvorrichtung zu aktivieren.

## Revendications

1. Dispositif de protection (1) pour connecteurs de liaison aux diagnostics embarqués d'un véhicule, **caractérisé en ce qu'**il comprend :
- un corps de recouvrement (3) d'un port de connexion (2) du type diagnostics embarqués, OBD, d'un système de diagnostic embarqué d'un véhicule, dans lequel ledit corps de recouvrement (3) comprend au moins un connecteur (4) apte à être inséré dans ledit port de connexion (2), et dans lequel ledit connecteur (4) comprend au moins une borne (6) électrique apte à être connectée à au moins une borne (7) électrique correspondante dudit port de connexion (2) ;
- des moyens de détection électroniques (5) pour détecter la connexion/déconnexion dudit corps de recouvrement (3) au/du port de connexion (2), dans lequel lesdits moyens de détection électroniques (5) comprennent des moyens de vérification (8) de la connexion entre ladite au moins une borne (6) électrique du connecteur (4) et ladite au moins une borne (7) électrique du port de connexion (2) ;
- au moins une unité de communication par ondes radio (9) connectée de manière fonctionnelle auxdits moyens de détection électroniques (5) et apte à envoyer, au moins à une unité de commande centrale (10) dudit véhicule, au moins un signal de notification (S) de la connexion/déconnexion dudit corps de recouvrement (3) au/du port de connexion (2).

2. Dispositif de protection (1) selon la revendication 1, **caractérisé en ce que** lesdits moyens de détection électroniques (5) sont aptes à détecter le couplage dudit dispositif de protection (1) audit port de connexion (2) et ladite unité de communication par ondes radio (9) est apte à signaler la présence dudit couplage au moyen de l'émission dudit signal de notification (S) à intervalles de temps prédéfinis.

3. Dispositif de protection (1) selon la revendication 1, **caractérisé en ce que** lesdits moyens de détection électroniques (5) sont aptes à détecter la déconnexion du dispositif de protection (1) du port de connexion (2) et ladite unité de communication par ondes radio (9) est apte à signaler ladite déconnexion au moyen de l'émission dudit signal de notification (S).

4. Dispositif de protection (1) selon l'une ou plusieurs des revendications précédentes, **caractérisé en ce qu'**il comprend au moins une unité de stockage (11) d'au moins un code VIN (numéro d'identification de véhicule) dudit véhicule.

5. Dispositif de protection (1) selon la revendication 4, **caractérisé en ce qu'**il comprend des moyens de lecture (12) du code VIN dudit véhicule au moyen dudit système de diagnostic embarqué et des moyens de contrôle (13) de la correspondance entre ledit code VIN stocké et ledit code VIN du véhicule.

6. Dispositif de protection (1) selon l'une ou plusieurs des revendications précédentes, **caractérisé en ce que** ledit connecteur (4) comprend au moins une borne (6) d'alimentation en énergie apte à être connectée à une borne (7) d'alimentation en énergie respective dudit port de connexion (2).

7. Dispositif de protection (1) selon l'une ou plusieurs des revendications précédentes, **caractérisé en ce qu'**il comprend au moins une batterie d'alimentation en énergie (14).

8. Dispositif de protection (1) selon l'une ou plusieurs des revendications précédentes, **caractérisé en ce que** ladite unité de communication par ondes radio (9) est une unité de communication à courte portée.

9. Dispositif de protection (1) selon l'une ou plusieurs des revendications précédentes, **caractérisé en ce qu'**il comprend au moins une unité de localisation (15) de la position dudit véhicule.

10. Dispositif de protection (1) selon l'une ou plusieurs des revendications précédentes, **caractérisé en ce qu'**il comprend au moins une unité de détection (16) de l'accélération instantanée dudit véhicule.

11. Dispositif de protection (1) selon l'une ou plusieurs des revendications précédentes, **caractérisé en ce que** ledit corps de recouvrement (3) comprend au moins un siège de logement (17) desdits moyens de détection électroniques (5) et de ladite unité de communication.

12. Dispositif de protection (1) selon l'une ou plusieurs des revendications précédentes, **caractérisé en ce que** ledit connecteur (4) comprend au moins un élément saillant (19) apte à être mis en prise en correspondance d'au moins un élément de butée (20) respectif sur ledit port de connexion (2) et des moyens de verrouillage (21) dudit élément saillant (19) en correspondance dudit élément de butée (20), aptes à empêcher des déconnexions intempestives du connecteur (4) lui-même du port de connexion (2).

13. Dispositif de protection (1) selon l'une ou plusieurs des revendications précédentes, **caractérisé en ce que** lesdits moyens de verrouillage (21) comprennent au moins un élément mobile (22) associé audit corps de recouvrement (3) et connecté de manière fonctionnelle audit élément saillant (19), ledit élément mobile (22) étant apte à être positionné dans une position d'arrêt, dans laquelle ledit élément saillant (19) est pressé et verrouillé en correspondance dudit élément de butée (20).

14. Système de protection (25) pour connecteurs de liaison aux diagnostics embarqués d'un véhicule, **caractérisé en ce qu'**il comprend au moins un dispositif de protection (1) selon l'une ou plusieurs des revendications précédentes et au moins une unité de commande centrale (10) apte à être installée sur ledit véhicule et ayant une unité de communication par ondes radio supplémentaire (26) connectée de manière fonctionnelle à ladite unité de communication par ondes radio (9) dudit dispositif de protection (1), ladite unité de commande centrale (10) étant apte à envoyer un signal d'alarme vers une station distante et/ou à activer au moins un dispositif antivol installé sur ledit véhicule en cas de déconnexion non autorisée dudit dispositif de protection (1) dudit port de connexion (2).
